# EUROPÄISCHE PATENTSCHRIFT

(11) **EP 3 443 312 B1**
(45) Veröffentlichungstag und Bekanntmachung des Hinweises auf die Patenterteilung: **13.05.2020**
(21) Anmeldenummer: 17719523.7
(22) Anmeldetag: 13.04.2017
(51) Int. Cl.: F27B 17/02, G01K 15/00

(54) **VERFAHREN ZUR KALIBRIERUNG EINES TEMPERATURMESSGERÄTS EINES DENTALOFENS UND KALIBRIERKÖRPER**
METHOD FOR CALIBRATING A TEMPERATURE MEASURING DEVICE OF A DENTAL OVEN AND CALIBRATION ELEMENT
PROCÉDÉ D'ÉTALONNAGE D'UN APPAREIL DE MESURE DE TEMPÉRATURE D'UN FOUR DENTAIRE ET BLOC D'ÉTALONNAGE

(30) Priorität: 15.04.2016 DE 102016206447
(43) Veröffentlichungstag der Anmeldung: 20.02.2019
(73) Patentinhaber: Sirona Dental Systems GmbH, 64625 Bensheim (DE)
(72) Erfinder: KURZ, Christian, 66292 Riegelsberg (DE)
(74) Vertreter: Özer, Alpdeniz
(86) Internationale Anmeldenummer: PCT/EP2017/058906
(87) Internationale Veröffentlichungsnummer: WO 2017/178579

(56) Entgegenhaltungen:
- DE-B3- 10 307 933
- JP-A- H01 212 334
- GARCIA F ET AL: "A magnetic phase transition temperature calibration device", JOURNAL OF APPLIED PHYSICS, AMERICAN INSTITUTE OF PHYSICS, US, Bd. 85, Nr. 8, 15. April 1999 (1999-04-15) , Seiten 5154-5156, XP012047377, ISSN: 0021-8979, DOI: 10.1063/1.369108

## Beschreibung

### Technisches Gebiet

Die Erfindung betrifft ein Verfahren zur Kalibrierung eines Temperaturmessgeräts eines Dentalofens mittels mindestens eines Kalibrierkörpers, wobei der mindestens eine Kalibrierkörper in dem Dentalofen während eines Heiz-Zeitintervalls von einer Anfangstemperatur auf eine Endtemperatur erwärmt wird und während des Heiz-Zeitintervalls die Temperatur im Dentalofen mittels des Temperaturmessgeräts als Ist-Temperatur gemessen wird.

### Stand der Technik

Für das Sintern, Glasieren und Trocknen von dentalen Restaurationen werden neuerdings induktive Hochtemperaturöfen eingesetzt. Induktionsöfen haben gegenüber den resistiv beheizten Öfen Vorteile im Hinblick auf die Geschwindigkeit.

Insbesondere für das Glasieren ist eine exakte Regelung der Temperatur während des Prozesses wichtig, da schon geringe Temperaturabweichungen zu mangelhaften Kristallisierungsergebnissen führen und gegebenenfalls eine Reduktion der Festigkeit oder ein Verschmelzen der Konturen bewirken.

Zur Kontrolle wird die Temperatur daher innerhalb des Ofens mittels eines Temperaturmessgeräts, z.B. einem Thermoelement, während des Prozesses gemessen. Das Temperaturmessgerät muss jedoch regelmäßig kalibriert werden, da insbesondere aufgrund von Alterungsprozessen auch als Drift bezeichnete Abweichungen zwischen der angezeigten Temperatur und der real im Ofen vorherrschenden Temperatur auftreten können.

Zur Kalibration wird typischerweise ein Kalibrierkörper in einer Ofenkammer des Ofens angeordnet und erwärmt. Beispielsweise kann ein Sinterring mit einem definierten Temperatur-Schrumpfungs-Verhältnis verwendet werden. Bekannt ist ferner den definierten Schmelzpunkt eines Materials, z.B. von Silber zu nutzen, indem ein aus dem Material bestehender Kalibrierkörper in den Ofen eingebracht, der Ofen möglichst exakt bis zu der Schmelztemperatur des Materials erhitzt und anschließend der Zustand des Kalibrierkörpers überprüft wird.

Als weitere Variante ist beispielsweise aus der DE 10 307 933 B3 bekannt, die spezifischen Eigenschaften von Aluminium zu nutzen, welches bei dem Erreichen des Schmelzpunkts formstabil bleibt, jedoch sein Volumen um 7% vergrößert. Es werden beispielsweise Kalibrierkörper angeboten, die eine Kontaktbrücke aus einem Aluminiumdraht aufweisen, wobei die Kontaktbrücke erst bei Erreichen des Schmelzpunkts durch die Volumenvergrößerung des Aluminiumdrahts geschlossen wird, wodurch das Erreichen der Schmelztemperatur im Ofen exakt ermittelt werden kann.

JP H01 212334 A beschreibt die Kalibration eines Temperaturmessfühlers eines thermogravimetrischen Analysegeräts mithilfe eines ferromagnetischen Materials. Garcia et al. 1999, "A magnetic phase transition temperature calibration device", Journal of Applied Physics, Bd. 85, Nr. 8, Seiten 5154-5156 beschreibt ebenfalls die Verwendung eines ferrimagnetischen Materials zur Temperatureichung.

Aufgabe der Erfindung ist es, den Stand der Technik weiterzubilden und ein möglichst genaues, zuverlässiges und kostengünstiges Verfahren zur Kalibration eines Temperaturmessgeräts eines Dentalofens bereit zu stellen.

### Darstellung der Erfindung

Ein Gegenstand der Erfindung ist ein Verfahren zur Kalibrierung eines Temperaturmessgeräts eines Dentalofens mittels mindestens eines Kalibrierkörpers, wobei der mindestens eine Kalibrierkörper in dem Dentalofen während eines Heiz-Zeitintervalls von einer Anfangstemperatur auf eine Endtemperatur erwärmt wird und während des Heiz-Zeitintervalls die Temperatur im Dentalofen mittels des Temperaturmessgeräts als Ist-Temperatur gemessen wird. Der mindestens eine Kalibrierkörper wird mittels des Dentalofens induktiv erwärmt und weist mindestens ein Messmaterial mit einem bei einer ersten Übergangstemperatur auftretenden, reversiblen Phasenübergang auf, wobei die erste Übergangstemperatur größer als die Anfangstemperatur und kleiner als die Endtemperatur ist und der Phasenübergang eine sprunghafte Änderung mindestens einer ersten Kenngröße des Dentalofens verursacht. Die erste Kenngröße des Dentalofens wird über das Heiz-Zeitintervall gemessen und mindestens eine erste sprunghafte Änderung der ersten Kenngröße während des Heiz-Zeitintervalls ermittelt, wobei eine Abweichung des bei der ersten sprunghaften Änderung der ersten Kenngröße mit dem Temperaturmessgerät gemessenen ersten Ist-Temperaturwert von der ersten Übergangstemperatur bestimmt und die Ist-Temperatur des Temperaturmessgeräts entsprechend der Abweichung korrigiert wird.

Als Messmaterial eignet sich zwar grundsätzlich jedes Material, welches einen temperaturabhängigen reversiblen Phasenübergang aufweist, welches eine Kenngröße des Dentalofens beeinflusst. Phasenübergang bezeichnet dabei eine sprunghafte Änderung einer Materialeigenschaften, beispielsweise eine sprunghafte Änderung der Permeabilität oder der Leitfähigkeit. Übergangstemperatur bezeichnet die materialspezifische Temperatur des Messmaterials, bei deren Erreichen der Phasenübergang, also die Eigenschaftsänderung auftritt.

Das Messmaterial ist dabei gemäß der Erfindung ein ferromagnetisches Material, welches bei Erreichen einer materialspezifischen Curie-Temperatur, welche der Übergangstemperatur entspricht, seine ferromagnetischen Eigenschaften verliert. Oberhalb der Curie-Temperatur weist das Material eine Permeabilität von 0 bzw. nur noch paramagnetische Eigenschaften auf. Es handelt sich um einen reversiblen Phasenübergang eines ferromagnetischen Materials in eine paramagnetische Hochtemperaturform bzw. um eine sprunghafte Änderung von Materialeigenschaften.

Der Phasenübergang des im Dentalofen befindlichen Kalibrierkörpers bzw. die Eigenschaftsänderung bei Erreichen der ersten Übergangstemperatur führt zu einer sprunghaften Änderung einer ersten Kenngröße des Dentalofens. So kann durch Erfassen der Kenngröße bzw. der sprunghaften Änderung der Kenngröße auf die Temperatur im Dentalofen zurückgeschlossen werden. Je genauer die Übergangstemperatur des Kalibrierkörpers bekannt ist, umso genauer kann die Kalibrierung vorgenommen werden. Die Übergangstemperatur kann beispielsweise eine feste bekannte Eigenschaft des Materials sein. Ferner kann für jeden einzelnen Kalibrierkörper die spezifische Übergangstemperatur einmal mit einer hohen Genauigkeit bestimmt werden, um sie anschließend für die Kalibrierung mit diesem Kalibrierkörper zu verwenden, wodurch die Genauigkeit der Kalibrierung entsprechend erhöht wird.

Die Kenngröße ist eine messbare Größe des Dentalofens, welche durch den Phasenübergang des Messmaterials beeinflusst wird, beispielsweise ein Strom, eine Spannung oder eine Frequenz. Z.B. kann als Kenngröße der Wechselstromwiderstand eines Induktors eines induktiv arbeitenden Dentalofens dienen, wobei z.B. durch das Verschwinden der Permeabilität eines aus Ferrit bestehenden Kalibrierkörpers ein sprunghafter Rückgang der Eigeninduktivität des Induktors verursacht wird, der zu einer sprunghaften Reduktion des Wechselstromwiderstands führt.

Die Reduktion des Wechselstromwiderstands gemäß dem vorbeschriebenen Ausführungsbeispiel kann beispielsweise anhand des durch den Induktor fließenden Stroms bzw. eines für den Induktor gemessenen Strom-Zeit-Verlaufs festgestellt werden, der bei Erreichen der Übergangstemperatur im Dentalofen sprunghaft abnimmt.

Die Größe des Sprungs bzw. der sprunghaften Änderung ist abhängig von der Art und der Menge des Messmaterials des Kalibrierkörpers. Beispielsweise kann ein aus Ferrit bestehender zylinderförmiger Körper mit einer Masse von 18,5 g, einem Außendurchmesser von 16 mm, einem Innendurchmesser von 10 mm und einer Höhe von 28 mm in einem Induktionsofen eine Stromänderung von ca. 2,5 A bewirken, wobei standardmäßig auftretende Schwankungen des Stroms sich typischerweise auf nur ca. 0,5 A bis 1 A belaufen, so dass die durch den Phasenübergang des Kalibrierkörpers hervorgerufene Änderung des Stroms deutlich von anderen Schwankungen zu unterscheiden ist.

Wird der Kalibrierkörper erst nach Beginn des Heiz-Zeitintervalls in den Dentalofen eingebracht, so kann auch das Einbringen eine sprunghafte Änderung der Kenngröße hervorrufen, der jedoch aufgrund der Zeit und des Vorzeichens von dem durch den Phasenübergang des Messmaterials verursachten und für die Kalibrierung zu ermittelnden Sprung unterscheidbar ist. Beispielsweise weist der Strom-Zeit-Verlauf eines Induktionsofens zu dem Zeitpunkt des Einbringens eines ferromagnetischen Kalibrierkörpers einen durch die Permeabilität des eingebrachten Kalibrierkörpers verursachten Sprung auf.

Die Temperatur im Brennraum wird zumindest bis zu einer Endtemperatur erhöht, die größer oder gleich der Übergangstemperatur des mindestens einen Messmaterials ist. Zumindest in den Bereichen des Phasenübergangs wird die von dem Temperaturmessgerät ermittelte Ist-Temperatur aufgezeichnet.

Besteht eine Abweichung zwischen einer zu dem Zeitpunkt des Phasenübergangs von dem Temperaturmessgerät angezeigten Ist-Temperatur, also dem gemessenen ersten Ist-Temperaturwert, und der ersten Übergangstemperatur des ersten Messmaterials des Kalibrierkörpers, so wird die Temperaturanzeige des Temperaturmessgeräts um die Abweichung korrigiert. Die Abweichung kann beispielsweise als Offset auf die Ist-Temperaturwerte des Temperaturmessgeräts angerechnet werden.

Einige Kenngrößen des Dentalofens werden bereits zur Leistungsüberwachung des Dentalofens gemessen, so dass zur Durchführung des erfindungsgemäßen Verfahrens keine weitere Messvorrichtung benötigt wird bzw. auf die bereits vorhandene Messung zurückgegriffen werden kann.

Beispielsweise wird häufig der in den Heizkreis eines Induktionsofens fließende Gesamtstroms zur Leistungsberechnung überwacht. Typischerweise wird hierfür ein Gleichstrom direkt am Netzteil überwacht, der erst anschließend mittels eines Oszillators in einen Wechselstrom gewandelt und dem Induktor zugeleitet wird. So sind zusätzliche Mittel zur Stromüberwachung für das Kalibrierverfahren nicht notwendig. Entsprechend kann auch jede andere dem Strom entsprechende Größe ebenso überwacht werden, um die durch den Phasenübergang des Kalibrierkörpers hervorgerufene sprunghafte Änderung bzw. den Zeitpunkt des Phasenübergangs zu ermitteln. Erfindungsgemäß ist es lediglich notwendig in irgendeiner Weise den Phasenübergang zu ermitteln, um den von dem Temperaturmessgerät beim Phasenübergang gemessenen ersten Ist-Temperaturwert messen zu können.

Durch die Reversibilität des Phasenübergangs des Messmaterials kann das erfindungsgemäße Verfahren mit demselben Kalibrierkörper wiederholt durchgeführt bzw. der Kalibrierkörper wiederholt verwendet werden.

Um die Übergangstemperatur des Phasenübergangs während des Aufheizens exakt zu treffen und eine Homogenisierung der Temperatur im Ofen während des Aufheizens zu ermöglichen, ist es vorteilhaft, die Temperatur im Ofen insbesondere in einem Bereich um die Übergangstemperatur nur langsam zu erhöhen. Zur Beschleunigung des Kalibrierprozesses kann in Temperaturbereichen, die zu der Übergangstemperatur entfernter sind, auch schneller geheizt werden.

Je genauer die Position des Kalibrierkörpers im Ofen mit der Position eines zu sinternden Bauteils übereinstimmt (z.B. unter Verwendung einer Positionierungslehre), umso exakter kann auf die reale Sintertemperatur des Ofens kalibriert werden.

Ein besonderer Vorteil des erfindungsgemäßen Verfahrens ist, dass es komplett automatisiert ablaufen kann. Ferner ist das Verfahren besonders einfach und kostengünstig durchführbar, insbesondere durch Verwendung eines einfach herzustellenden, kontaktfrei verwendbaren und wiederverwendbaren Kalibrierkörpers und da häufig bereits Vorrichtungen zur Überwachung bzw. Messung der ersten Kenngröße des Dentalofens bereits vorhanden und keine zusätzlichen Vorrichtungen notwendig sind.

Vorteilhafterweise weist der mindestens eine Kalibrierkörper mindestens ein erstes Messmaterial und ein zweites Messmaterial auf oder mindestens ein erstes Messmaterial aufweisender erster Kalibrierkörper und ein zweites Messmaterial aufweisender zweiter Kalibrierkörper werden gleichzeitig in dem Dentalofen erwärmt. Dabei weist das erste Messmaterial eine erste Übergangstemperatur und das zweite Messmaterial eine sich von der ersten Übergangstemperatur unterscheidende zweite Übergangstemperatur auf. Für jedes Messmaterial wird eine sprunghafte Änderung der ersten Kenngröße während des Heiz- Zeitintervalls ermittelt und jeweils eine Abweichung des bei der jeweiligen sprunghaften Änderung der ersten Kenngröße mit dem Temperaturmessgerät gemessenen Ist-Temperaturwerts von der jeweiligen Übergangstemperatur des jeweiligen Messmaterials bestimmt. Aufgrund der für die unterschiedlichen Messmaterialien ermittelten Abweichungen wird ein Korrekturwert und/oder eine lineare Korrektur zwischen den Abweichungen gebildet und die Ist-Temperatur des Temperaturmessgeräts um den Korrekturwert und/oder die lineare Korrektur korrigiert.

Durch die Mehrpunktkalibrierung mittels der unterschiedlichen Messmaterialien wird die Genauigkeit des Kalibriervorgangs auf einfache Weise erhöht, ohne dass hierfür der zeitliche Aufwand des Kalibriervorgangs deutlich zunimmt. Je mehr hinsichtlich der Übergangstemperatur unterschiedliche Messmaterialien der Kalibrierkörper aufweist oder je mehr Kalibrierkörper mit jeweils hinsichtlich der Übergangstemperatur unterschiedlichen Messmaterialien, umso mehr Temperaturabweichungen können innerhalb des Heiz-Zeitintervalls ermittelt und bei der Kalibration des Temperaturmessgeräts berücksichtigt werden. Dabei erhöht sich der materielle und fertigungstechnische Aufwand insbesondere für einen mehrere Messmaterialien aufweisenden Kalibrierkörper bzw. der verfahrenstechnische Aufwand bei Verwendung mehrerer Kalibrierkörper nur geringfügig. Der Korrekturwert kann beispielsweise ein gemittelter Korrekturwert sein oder es kann eine lineare Korrektur vorgenommen werden.

Weil der Kalibrierkörper mittels des Dentalofens induktiv erwärmt wird, können die Induktionseigenschaften des Dentalofens beeinflussende Materialien als Messmaterialien verwendet werden bzw. eine Beeinflussung der Induktionseigenschaften des Dentalofens kann beispielsweise einfach anhand einer Änderung des Induktionsstroms oder der am Induktionsofen anliegenden Spannung nachgewiesen werden.

Das mindestens eine Messmaterial ist ferromagnetisch oder ferrimagnetisch, wobei die Übergangstemperatur der Curie-Temperatur des Messmaterials entspricht. Mit einer typischen Toleranz von ca. +/-5 Kelvin unterhalb 100°C und von +/-7,5 Kelvin oberhalb von 100°C für die Curie-Temperatur eines ferromagnetischen Materials eignet sich die Curie-Temperatur besonders gut für eine exakte Temperaturbestimmung bzw. für eine angestrebte Kalibriergenauigkeit von z. B. +/-20 Kelvin. Ferner kann für jeden Kalibrierkörper die spezifische Curie-Temperatur mit einer höheren Genauigkeit einmal bestimmt werden, um sie anschließend für die Kalibrierung mit diesem Kalibrierkörper zu verwenden, wodurch die Genauigkeit der Kalibrierung entsprechend erhöht wird.

Vorteilhafterweise weist mindestens ein Messmaterial eine sprunghafte Änderung der Leitfähigkeit in Abhängigkeit von der Temperatur auf. Auch die Leitfähigkeit stellt eine Materialeigenschaft dar, deren sprunghafte Änderung beispielsweise Eigeninduktivität eines Induktionsofens beeinflusst.

Vorteilhafterweise ist die Kenngröße eine Amplitude eines Stroms oder einer Spannung oder eine FreQuenz eines Wechselstroms oder einer Wechselspannung. Dies sind einfach zu messende Eigenschaften des Dentalofens, die darüber hinaus häufig für die Leistungsüberwachung des Ofens gemessen werden.

Das hier beschriebene Verfahren verwendet einen Kalibrierkörper zur Kalibrierung eines Temperaturmessgeräts eines Dentalofens, der mindestens ein erstes Messmaterial aufweist, wobei das Messmaterial einen bei einer ersten Übergangstemperatur auftretenden, reversiblen Phasenübergang aufweist. Das mindestens eine Messmaterial ist ferromagnetisch oder ferrimagnetisch, wobei die Übergangstemperatur des mindestens einen Messmaterials der Curie-Temperatur entspricht. Ein Phasenübergang eines Messmaterials, der eine sprunghafte Änderung einer Materialeigenschaft verursacht, kann eine Kenngröße eines Dentalofens beeinflussen. Beispielsweise verursacht das Verschwinden der Permeabilität eines ferromagnetischen Materials bei dem Erreichen der materialspezifischen Curie-Temperatur einen Lastsprung eines zum Erwärmen genutzten Induktors. Aufgrund der Reversibilität und einer kritischen Temperaturabhängigkeit des Phasenübergangs eignet sich ein aus einem erfindungsgemäßen Messmaterial bestehender Kalibrierkörper zur Kalibration von Dentalöfen. Da der Kalibrierkörper keine weiteren Anforderungen erfüllen muss, außer das Aufweisen des mindestens einen Messmaterials, ist der Kalibrierkörper kostengünstig und einfach herstellbar.

Es versteht sich, dass der Kalibrierkörper aus einem hitzebeständigen Material besteht, welches beim Aufheizen nicht ausgast. Ferner sind alle bei der Erläuterung des erfindungsgemäßen Verfahrens gemachten Ausführungen auf das Messmaterial des Kalibrierkörpers und dessen Eigenschaften übertragbar.

Vorteilhafterweise weist der Kalibrierkörper mindestens zwei Messmaterialien auf, wobei die Messmaterialien jeweils unterschiedliche Übergangstemperaturen aufweisen. Ein solcher Kalibrierkörper ermöglicht eine MehrpunktKalibrierung, wodurch eine höhere Genauigkeit der Kalibrierung erreicht werden kann.

Vorteilhafterweise sind die mindestens zwei Messmaterialien stapelförmig übereinander angeordnet. Es versteht sich dass jede beliebige Anordnung der beiden Messmaterialien möglich ist. Eine stapelförmige Anordnung stellt eine besonders einfache und insbesondere einfach herzustellende Anordnung dar. Dabei bezieht sich die stapelförmige Anordnung lediglich auf einen schichtartigen Aufbau und soll nicht dahingehend einschränken, wie dieser Stapel in einem Dentalofen angeordnet wird. Insbesondere stellt auch ein im Dentalofen positionierter Kalibrierkörper mit nebeneinander angeordneten Messmaterialien eine stapelförmige Anordnung dar, wobei der Kalibrierkörper auf einer Seite liegend positioniert ist.

Das mindestens ein Messmaterial weist bei Erreichen der Übergangstemperatur eine sprunghafte Änderung der Leitfähigkeit auf.

### Kurzbeschreibung der Zeichnungen

Ausführungsbeispiele der Erfindung sind in der Zeichnung dargestellt. Es zeigt
- Fig. 1: eine schematische Ansicht eines Aufbaus zur erfindungsgemäßen Kalibration eines Temperaturmessgeräts eines Dentalofens,
- Fig. 2: eine Skizze eines Strom-Zeit-Verlaufs und eines Temperatur-Zeit-Verlaufs während einer erfindungsgemäßen Kalibration,
- Fig. 3: einen schematischen Ablauf des erfindungsgemäßen Kalibrierverfahrens.

### Ausführungsbeispiele

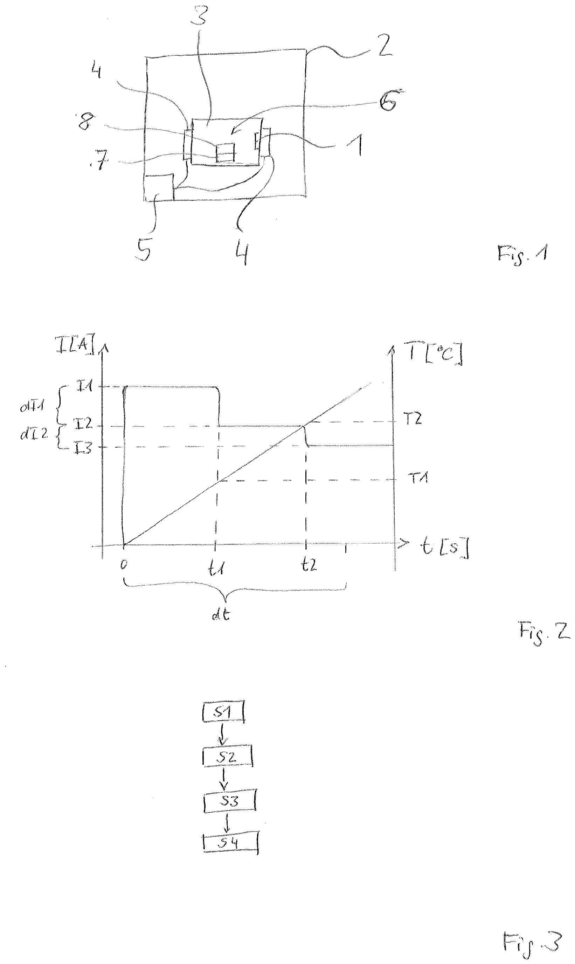

Die Fig. 1 zeigt einen Aufbau zur Kalibration eines Temperaturmessgeräts 1 eines Dentalofens 2. Das Temperaturmessgerät 1 ist zumindest teilweise innerhalb einer Ofenkammer 3 des Dentalofens 2 angeordnet. Zur Erwärmung der Ofenkammer 3 weist der Dentalofen 2 im dargestellten Ausführungsbeispiel mindestens einen Induktor 4 auf, der mittels einer Strom-/Spannungsquelle 5 betrieben wird.

Für die Kalibration wird ein Kalibrierkörper 6 in der Ofenkammer 3 angeordnet und mittels des Induktors 4 erwärmt, wobei mittels des Temperaturmessgeräts 1 eine Ist-Temperatur in der Ofenkammer gemessen wird.

Der Kalibrierkörper 6 weist im dargestellten Ausführungsbeispiel ein erstes und ein zweites Messmaterial 7, 8 auf, wobei die beiden Messmaterialien 7, 8 stapelförmig übereinander angeordnet sind. Das erste Messmaterial 7 ist ferromagnetisch und weist eine Curie-Temperaturen als erste Übergangstemperatur TC1 auf, bei deren Erreichen das erste Messmaterial 7 in einen paramagnetischen Hochtemperaturzustand übergeht. Das zweite Material 8 ist ebenfalls ferromagnetisch und weist eine Curie-Temperatur als zweite Übergangstemperatur TC2 auf, bei deren Erreichen das zweite Messmaterial in einen paramagnetischen Hochtemperaturzustand übergeht, wobei die zweite Übergangstemperatur TC2 höher als die erste Übergangstemperatur TC1 ist.

Der Phasenübergang der Messmaterialien 7, 8 bewirkt jeweils einen Lastsprung des Dentalofens 2, der sich beispielsweise am Stromverbrauch erkennen lässt. Als erste Kenngröße I, die durch den Phasenübergang beeinflusst wird, dient daher in dem hier beschriebenen Ausführungsbeispiel der durch den Induktor fließende Strom.

Die Fig. 2 veranschaulicht in einem Graphen die Verlaufskurven des durch den Induktor 4 fließenden Stroms I sowie der von dem Temperaturmessgerät 1 gemessenen Ist-Temperatur T in Abhängigkeit von einer Zeit t während des Erwärmens des Kalibrierkörpers 6 in dem Dentalofen 2. Nach einem Einschalten der Strom-/Spannungsquelle 5 zu einem Zeitpunkt t=0 und einem dem Einschaltvorgang entsprechenden Sprung des Stromabfalls I am Induktor 4 auf einen Wert 1=11, steigt die Ist-Temperatur T im dargestellten Ausführungsbeispiel über die Zeit t linear an.

Der Strom I weist bis zu einem Zeitpunkt t=t1 einen relativ konstanten Wert I=I1 auf. Zum Zeitpunkt t=t1 fällt der Stromverbrauch I im dargestellten Ausführungsbeispiel um dI1 auf I2=I1-dI1 ab. In der sich an den Zeitpunkt t=t1 anschließenden Zeit t verbleibt der Strom I bis zu einem Zeitpunkt t=t2 bei einem Wert I=I2, wobei t2 größer als t1 ist. Zum Zeitpunkt t=t2 fällt der durch den Induktor 4 fließende Strom I um dI2 auf I3=I2-dI2 ab.

Der erste Sprung dI1 des Stromverlaufs I zum Zeitpunkt t=t1 zeigt den Phasenübergang des ersten ferromagnetischen Materials 7 des Kalibrierkörpers 6 und damit das Erreichen der ersten Übergangstemperatur TC1 in der Ofenkammer 3 an, während der zweite Sprung dI2 des Stromverlaufs I zum Zeitpunkt t=t2 den Phasenübergang des zweiten ferromagnetischen Materials 8, also das Erreichen der zweiten Übergangstemperatur TC2 in der Ofenkammer 3 markiert. Dem Strom-Zeit-Verlauf sind die Zeitpunkte t1 und t2 entsprechend einfach anhand der Sprünge zu entnehmen. Die mittels des Temperaturmessgeräts 1 für die jeweiligen Phasenübergänge gemessenen Ist-Temperaturmesswerte T1 und T2 können im dargestellten Ausführungsbeispiel entsprechend dem Temperatur-Zeit-Verlauf für die Zeitpunkte t1 und t2 entnommen werden.

Fig. 3 gibt schematisch die Verfahrensschritte gemäß einer ersten Ausführungsform wieder. Nach dem Erwärmen des Kalibrierkörpers 6 in einem ersten Schritt S1 werden in einem zweiten Schritt S2 die Sprünge im Strom-Zeit-Verlauf des durch den Induktor 4 fließenden Stroms I bzw. die den Sprüngen entsprechenden Zeitpunkte t1 und t2 und der zu dem ersten Zeitpunkt t1 von dem Temperaturmessgerät 1 gemessenen erste Ist-Temperaturwert T1 sowie der zu dem zweiten Zeitpunkt t2 von dem Temperaturmessgerät 1 gemessenen zweite Ist-Temperaturwert T2 ermittelt.

In einem dritten Schritt S3 werden eine erste Abweichung A1 des ersten Ist-Temperaturwerts T1 von der ersten Übergangs-Temperatur TC1 sowie eine zweite Abweichung A2 des zweiten Ist-Temperaturwerts T2 von der zweiten Übergangs - Temperatur TC2 bestimmt.

In einem Schritt S4 wird die Ist-Temperatur T des Temperaturmessgeräts 1 um einen anhand der beiden Abweichungen A1, A2 gebildeten Korrekturwert K und/oder anhand einer linearen Korrektur zwischen den Abweichungen A1 und A2 über den Temperaturbereich korrigiert.

### Bezugszeichenliste

- 1: Temperaturmessgerät
- 2: Dentalofen
- 3: Ofenkammer
- 4: Induktor
- 5: Strom-/Spannungsquelle
- 6: Kalibrierkörper
- 7: erstes Messmaterial
- 8: zweites Messmaterial
- dI1, dI2: sprunghafte Änderung der Kenngröße
- dt: Heiz-Zeitintervall
- I: Kenngröße
- S1-S4: Verfahrensschritte
- T: Ist-Temperatur
- T1, T2: erster und zweiter Ist-Temperaturwert
- TC1, TC2: erste und zweite Übergangs-Temperatur
- t: Zeit

## Patentansprüche

1. Verfahren zur Kalibrierung eines Temperaturmessgeräts (1) eines Dentalofens (2) mittels mindestens eines Kalibrierkörpers (6),
- wobei der mindestens eine Kalibrierkörper (6) in dem Dentalofen (2) während eines Heiz-Zeitintervalls (dt) von einer Anfangstemperatur (TA) auf eine Endtemperatur (TE) erwärmt wird,- wobei während des Heiz-Zeitintervalls (dt) die Temperatur im Dentalofen (3) mittels des Temperaturmessgeräts (1) als Ist-Temperatur (T) gemessen wird, wobei der Kalibrierkörper (6) mittels des Dentalofens (2) induktiv erwärmt wird,
- der mindestens eine Kalibrierkörper (6) mindestens ein Messmaterial (7) aufweist, wobei das mindestens eine Messmaterial (7, 8) ferromagnetisch oder ferrimagnetisch ist,
- das Messmaterial einen bei einer ersten Übergangstemperatur (TC1) auftretenden, reversiblen Phasenübergang aufweist, wobei die Übergangstemperatur (TC1, TC2) der Curie-Temperatur des Messmaterials (7, 8) entspricht.
- die erste Übergangstemperatur (TC1) größer als die Anfangstemperatur (TA) und kleiner als die Endtemperatur (TE) ist,
- der Phasenübergang eine sprunghafte Änderung mindestens einer ersten Kenngröße (I) des Dentalofens (2) verursacht,
- die erste Kenngröße (I) des Dentalofens (2) über das Heiz-Zeitintervall (dt) gemessen und mindestens eine erste sprunghafte Änderung (dI1) der ersten Kenngröße (I) während des Heiz-Zeitintervalls (dt) ermittelt wird,
- wobei eine Abweichung des bei der ersten sprunghaften Änderung (dI1) der ersten Kenngröße des Dentalofens (I) mit dem Temperaturmessgerät (1) gemessenen ersten Ist-Temperaturwert (T1) von der ersten Übergangstemperatur (TC1) bestimmt und die Ist-Temperatur (T) des Temperaturmessgeräts (1) entsprechend der Abweichung korrigiert wird.

2. Verfahren nach Anspruch 1, **dadurch gekennzeichnet, dass** der mindestens eine Kalibrierkörper mindestens ein erstes Messmaterial (7) und ein zweites Messmaterial (8) aufweist oder mindestens ein erstes Messmaterial (7) aufweisender erster Kalibrierkörper und ein zweites Messmaterial (8) aufweisender zweiter Kalibrierkörper gleichzeitig in dem Dentalofen (2) erwärmt werden,
- wobei das erste Messmaterial (7) eine erste Übergangstemperaturen (TC1) und das zweite Messmaterial (8) eine sich von der ersten Übergangstemperatur (TC1) unterscheidende zweite Übergangstemperatur (TC2) aufweist,
- wobei für jedes Messmaterial (7, 8) eine sprunghafte Änderung (dI1, dI2) der ersten Kenngröße (I) während des Heiz- Zeitintervalls (dt) ermittelt wird, jeweils eine Abweichung des bei der jeweiligen sprunghaften Änderung(dI1, dI2) der ersten Kenngröße (I) mit dem Temperaturmessgerät (1) gemessenen Ist-Temperaturwerts (T1, T2) von der jeweiligen Übergangstemperatur (TC1, TC2) des jeweiligen Messmaterials (7, 8) bestimmt wird und
- wobei aufgrund der für die unterschiedlichen Messmaterialien (7, 8) ermittelten Abweichungen ein Korrekturwert (K) und/oder eine lineare Korrektur zwischen den Abweichungen gebildet und die Ist-Temperatur (T) des Temperaturmessgeräts (1) um den Korrekturwert (K) und/oder die lineare Korrektur korrigiert wird.

3. Verfahren nach einem der Ansprüche 1 bis 2, **dadurch gekennzeichnet, dass** mindestens ein Messmaterial (7, 8) eine sprunghafte Änderung der Leitfähigkeit in Abhängigkeit von der Temperatur aufweist.

4. Verfahren nach einem der Ansprüche 1 bis 3, **dadurch gekennzeichnet, dass** die Kenngröße (I) eine Amplitude eines Stroms oder einer Spannung oder eine Frequenz eines Wechselstroms oder einer Wechselspannung ist.

## Claims

1. A method for calibrating a temperature measuring device (1) of a dental oven (2) by means of at least one calibration element (6),
- wherein the at least one calibration element (6) is heated in the dental oven (2) during a heating time interval (dt) from an initial temperature (TA) to an end temperature (TE), - wherein, during the heating time interval (dt), the temperature in the dental oven (3) is measured as an actual temperature (T) by means of the temperature measuring device (1), wherein the calibration element (6) is heated inductively by means of the dental oven (2),
- the at least one calibration element (6) has at least one measuring material (7), wherein the at least one measurement material (7, 8) is ferromagnetic or ferrimagnetic,
- the measurement material has a reversible phase transition occurring at a first transition temperature (TC1), wherein the transition temperature (TC1, TC2) corresponds to the Curie temperature of the measurement material (7, 8).
- the first transition temperature (TC1) is greater than the initial temperature (TA) and less than the end temperature (TE),
- the phase transition causes a rapid change in at least one first parameter (I) of the dental oven (2),
- the first parameter (I) of the dental oven (2) is measured over the heating time interval (dt) and at least one first rapid change (dI1) of the first parameter (I) is determined during the heating time interval (dt),
- wherein a deviation of the first actual temperature value (T1) measured with the temperature measuring device (1) during the first rapid change (dI1) of the first parameter of the dental oven (I) from the first transition temperature (TC1) is determined and the actual temperature (T) of the temperature measuring device (1) is corrected according to the deviation.

2. The method according to claim 1, **characterised in that** the at least one calibration element has at least one first measurement material (7) and one second measurement material (8) or at least one first calibration element comprising a first measurement material (7) and a second calibration element comprising a second measurement material (8) are heated simultaneously in the dental oven (2),
- wherein the first measurement material (7) has a first transition temperature (TC1) and the second measurement material (8) has a second transition temperature (TC2) that differs from the first transition temperature (TC1),
- wherein, for each measurement material (7, 8) a rapid change (dI1, dI2) of the first parameter (I) is determined during the heating time interval (dt), a deviation of the actual temperature value (T1, T2) from the respective transition temperature (TC1, TC2) of the respective measuring material (7, 8) measured with the temperature measuring device (1) in the event of the respective rapid change (dI1, dI2) of the first parameter (I) is determined, and
- wherein a correction value (K) and/or a linear correction is formed between the deviations on the basis of the deviations determined for the various measurement materials (7, 8) and the actual temperature (T) of the temperature measuring device (1) is corrected by the correction value (K) and/or the linear correction.

3. The method according to any one of claims 1 to 2, **characterised in that** at least one measurement material (7, 8) has a rapid change in conductivity depending on the temperature.

4. The method according to any one of claims 1 to 3, **characterised in that** the parameter (I) is an amplitude of a current or a voltage or a frequency of an alternating current or an alternating voltage.

## Revendications

1. Procédé d'étalonnage d'un appareil de mesure de température (1) d'un four dentaire (2) au moyen d'au moins un bloc d'étalonnage (6),
- le au moins un bloc d'étalonnage (6) étant chauffé dans le four dentaire (2) pendant un intervalle de temps de chauffage (dt) allant d'une température de début (TA) à une température de fin (TE), - pendant l'intervalle de temps de chauffage (dt) la température dans le four dentaire (3) étant mesurée au moyen de l'appareil de mesure de température (1) comme étant la température réelle (T), le bloc d'étalonnage (6) étant chauffé par induction au moyen du four dentaire (2),
- le au moins un bloc d'étalonnage (6) présentant au moins un matériau de mesure (7), le au moins un matériau de mesure (7, 8) étant ferromagnétique ou ferrimagnétique,
- le matériau de mesure présentant une transition de phase réversible se produisant à une première température de transition (TC1), la température de transition (TC1, TC2) correspondant au point de Curie du matériau de mesure (7, 8),
- la première température de transition (TC1) étant supérieure à la température de début (TA) et inférieure à la température de fin (TE),
- la transition de phase provoquant un changement brusque d'au moins un premier paramètre (I) du four dentaire (2),
- le premier paramètre (I) du four dentaire (2) étant mesuré sur l'intervalle de temps de chauffage (dt) et au moins un premier changement brusque (dI1) du premier paramètre (I) étant déterminé pendant l'intervalle de temps de chauffage (dt),
- un écart de la première valeur de température réelle (T1) mesurée à l'aide de l'appareil de mesure de température (1) lors du premier changement brusque (dI1) du premier paramètre du four dentaire (I) étant déterminé par la première température de transition (TC1) et la température réelle (T) de l'appareil de mesure de température (1) étant corrigée en fonction de l'écart.

2. Procédé selon la revendication 1, **caractérisé en ce que** le au moins un bloc d'étalonnage présente au moins un premier matériau de mesure (7) et un second matériau de mesure (8) ou au moins un premier bloc d'étalonnage présentant le premier matériau de mesure (7) et un second bloc d'étalonnage présentant le second matériau de mesure (8) sont chauffés en même temps dans le four dentaire (2),
- le premier matériau de mesure (7) présentant une première température de transition (TC1) et le second matériau de mesure (8) présentant une seconde température de transition (TC2) différente de la première température de transition (TC1),
- pour chaque matériau de mesure (7, 8) un changement brusque (dI1, dI2) du premier paramètre (I) étant déterminé pendant l'intervalle de temps de chauffage (dt), respectivement un écart de la valeur de température réelle (T1, T2) mesurée à l'aide de l'appareil de mesure de température (1) lors de chaque changement brusque (dI1, dI2) du premier paramètre (I) étant déterminé par chaque température de transition (TC1, TC2) de chaque matériau de mesure (7, 8) et
- en raison des écarts déterminés pour les différents matériaux de mesure (7, 8), une valeur de correction (K) et/ou une correction linéaire étant formées entre les écarts et la température réelle (T) de l'appareil de mesure de température (1) étant corrigée à hauteur de la valeur de correction (K) et/ou de la correction linéaire.

3. Procédé selon l'une quelconque des revendications 1 à 2, **caractérisé en ce qu'**au moins un matériau de mesure (7, 8) présente un changement brusque de conductivité en fonction de la température.

4. Procédé selon l'une quelconque des revendications 1 à 3, **caractérisé en ce que** le paramètre (I) est une amplitude d'un courant ou d'une tension ou une fréquence d'un courant alternatif ou d'une tension alternative.
